# EUROPEAN PATENT APPLICATION

(11) **EP 4 722 839 A1**
(43) Date of publication of application: **08.04.2026**
(21) Application number: 25204536.4
(22) Date of filing: 25.09.2025
(51) Int. Cl.: G05D 1/249, G05D 1/617, G05D 105/45, G05D 107/70, G05D 109/10, G05D 111/10

(54) **VEHICLE MANUFACTURING SYSTEM AND VEHICLE MANUFACTURING METHOD**

(30) Priority: 07.10.2024 JP 2024176104
(71) Applicant: TOYOTA JIDOSHA KABUSHIKI KAISHA, Toyota-shi, Aichi-ken 471-8571 (JP)
(72) Inventor: IWAZAKI, Noritsugu, Toyota-shi, 471-8571 (JP); KANOU, Takeshi, Toyota-shi, 471-8571 (JP); INOUE, Go, Toyota-shi, 471-8571 (JP); OKAMOTO, Yuki, Toyota-shi, 471-8571 (JP); OKA, Yuhei, Toyota-shi, 471-8571 (JP); KAKUMA, Daisuke, Toyota-shi, 471-8571 (JP); CHIBA, Hiroya, Toyota-shi, 471-8571 (JP); OHARA, Kento, Toyota-shi, 471-8571 (JP)
(74) Representative: J A Kemp LLP

(57) **Abstract**

A vehicle manufacturing system including: a camera configured to capture an image of a traveling area where the plurality of vehicles travel and an area near the traveling area; a worker detection unit (252) configured to detect a worker based on the image captured by the camera; an area determination unit (253) configured to determine whether or not the worker is in a detection area corresponding to the traveling area or a non-detection area which is on each of right and left sides of the traveling area; a posture detection unit (254) configured to detect a posture of a worker who is in the detection area by performing image processing on the image captured by the camera; and a stop control unit (255) configured to stop the vehicle based on the posture of the worker.

## Description

### BACKGROUND

The present disclosure relates to a vehicle manufacturing system and a vehicle manufacturing method.

Patent Literature 1 discloses a vehicle manufacturing system. A vehicle travels, by autonomous control or remote control, in a system for producing vehicles.

[Patent Literature 1] Published Japanese Translation of PCT International Publication for Patent Application, No. 2017-538619

### SUMMARY

In a vehicle manufacturing factory, a plurality of vehicles run autonomously along a transport path and are sequentially manufactured. Therefore, productivity can be improved. On the other hand, it is also desirable to control vehicles from the outside. For example, in the case of an emergency, a worker may want to stop or slow down a vehicle. Operation devices such as switches and buttons are installed near the manufacturing line so that the worker can easily operate the devices in the above case. However, if the device is installed in the transport path, it interferes with traveling of the vehicle and the work of the worker. Therefore, there is a problem that the worker cannot stop the vehicle quickly.

An object of the present disclosure is to provide a vehicle manufacturing system and a vehicle manufacturing method that enable a worker to stop a vehicle quickly.

A vehicle manufacturing system according to the present disclosure is a vehicle manufacturing system for performing control in such a way that a plurality of vehicles forming a platoon travel during a manufacturing process or a transporting process, the vehicle manufacturing system including: a camera configured to capture an image of a traveling area where the plurality of vehicles travel and an area near the traveling area; a worker detection unit configured to detect a worker based on the image captured by the camera; an area determination unit configured to determine whether or not the worker is in a detection area corresponding to the traveling area or a non-detection area which is on each of right and left sides of the traveling area; a posture detection unit configured to detect a posture of a worker who is in the detection area by performing image processing on the image captured by the camera; and a stop control unit configured to stop the vehicle based on the posture of the worker.

A vehicle manufacturing method according to the present disclosure is a vehicle manufacturing method for performing control in such a way that a plurality of vehicles forming a platoon travel during a manufacturing process or a transporting process, the vehicle manufacturing method including: a step of capturing, by a camera, an image of a traveling area where the plurality of vehicles travel and an area near the traveling area; a step of detecting a worker based on the image captured by the camera; a step of determining whether or not the worker is in a detection area corresponding to the traveling area or a non-detection area which is on each of right and left sides of the traveling area; a step of detecting a posture of a worker who is in the detection area by performing image processing on the image captured by the camera; and a step of stopping the vehicle based on the posture of the worker.

According to the present disclosure, it is possible to provide a vehicle manufacturing system and a vehicle manufacturing method that enable a worker to stop a vehicle quickly.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram showing a whole configuration of a vehicle manufacturing system;
Fig. 2 is a schematic diagram showing a part of the vehicle manufacturing system;
Fig. 3 is a plan view schematically showing a part of a traveling path of the vehicle manufacturing system;
Fig. 4 is a side view schematically showing a part of the traveling path of the vehicle manufacturing system;
Fig. 5 is a block diagram showing a control system of the vehicle manufacturing system;
Fig. 6 is a flowchart showing a vehicle manufacturing method;
Fig. 7 is a diagram for describing travel control of a vehicle;
Fig. 8 is a control block diagram for describing a travel control example 1;
Fig. 9 is a flowchart for describing the travel control example 1;
Fig. 10 is a control block diagram for describing a travel control example 2; and
Fig. 11 is a flowchart for describing the travel control example 2.

### DESCRIPTION OF EMBODIMENTS

Embodiments of the present disclosure will now be described with reference to the drawings. However, the claimed disclosure is not limited to the following embodiments. Moreover, not all of the configurations described in the embodiments are essential as means for solving the problem. For the sake of clarity of the explanation, the following descriptions and drawings have been omitted and simplified as appropriate. In each drawing, the same elements have the same reference signs, and repeated descriptions have been omitted as appropriate.

### First Embodiment

### Vehicle Manufacturing System

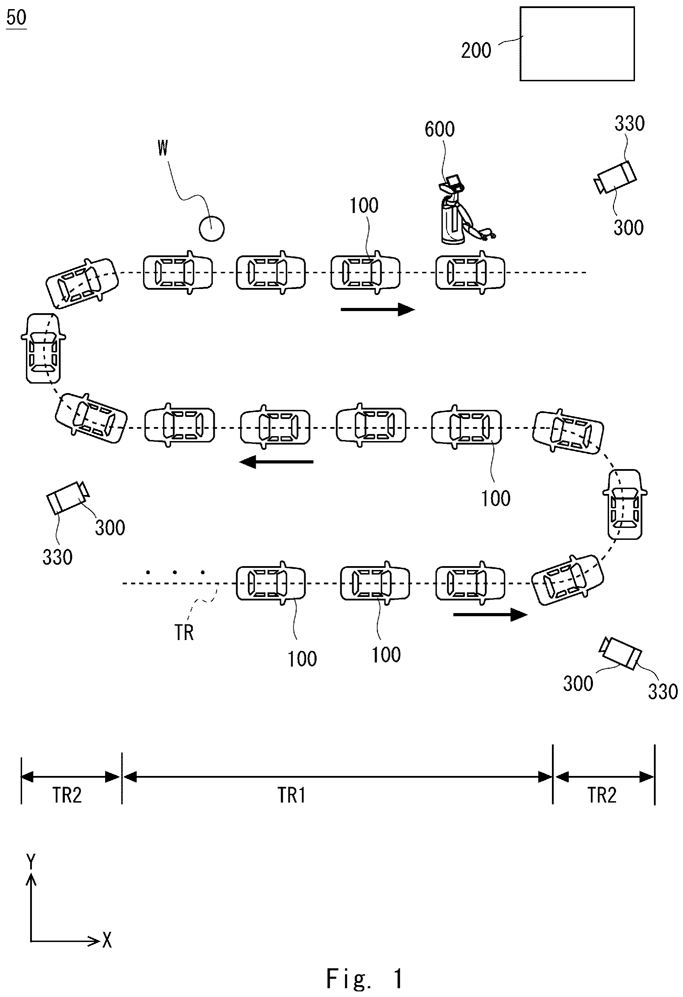

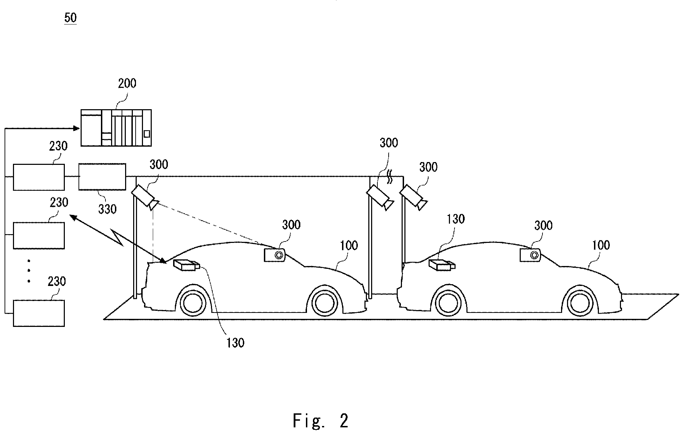

With reference to Figs. 1 and 2, a vehicle manufacturing system 50 according to this embodiment will be described. Fig. 1 is a schematic diagram showing a configuration of the vehicle manufacturing system 50. Fig. 2 is a diagram schematically showing two traveling vehicles 100. Fig. 1 shows an XY orthogonal coordinate system for the sake of clarity of the explanation.

The vehicle manufacturing system (this may also be referred to as the system) 50 is used in a vehicle manufacturing factory where vehicles 100 are manufactured. The vehicle manufacturing system 50 is also used in a transport location where a transporting process such as transportation to a yard or shipment is carried out. As shown in Fig. 1, the vehicle manufacturing system 50 includes a server 200, a sensor 300, and a robot 600. The plurality of vehicles 100 are self-driving vehicles that can travel by themselves during a manufacturing process. The vehicle manufacturing system 50 performs control in such a way that the plurality of vehicles 100 perform travel in a form of a platoon (i.e. a formation or an alignment).

The sensor 300 includes a communication apparatus 330 that transmits or receives data to or from the server 200. The server 200 includes a communication apparatus 230 that transmits or receives data to or from the sensor 300. Further, as shown in Fig. 2, the communication apparatus 230 has a function of transmitting or receiving data to or from the vehicle 100. Further, the vehicle 100 includes a communication apparatus 130 that receives data from the server 200. Each of the vehicles 100 includes the communication apparatus 130.

The communication apparatus 130, the communication apparatus 230, and the communication apparatus 330 may each be general-purpose equipment such as a network hub or a router apparatus. The communication apparatus 130, the communication apparatus 230, and the communication apparatus 330 each use, for example, general-purpose wireless communication such as WiFi (registered trademark). In each of the communication apparatus 130, the communication apparatus 230, and the communication apparatus 330, an address for specifying the communication partner is set. An address for communication is, for example, an Internet Protocol (IP) address.

Each of the vehicles 100 is a vehicle whose manufacturing has not yet been completed. As shown in Fig. 1, the vehicle 100 travels along a traveling path TR set in advance. The manufacturing of the vehicle 100 is gradually done as it travels along the traveling path TR. Specifically, while the vehicle 100 travels along the traveling path, workers W, a robot 600, or the like perform assembling of parts, switch operations, welding, inspection, and so on. The work in each manufacturing process is thus performed. The work in each manufacturing process is performed in a predetermined order, whereby the vehicle 100 is manufactured.

A plurality of vehicles 100 travel in a form of a platoon. Specifically, the vehicles 100 travel at a constant speed in such a way that distances between vehicles are constant at a predetermined distance. Further, the plurality of vehicles 100 travel at the same speed. Further, the traveling path TR includes a straight-ahead area TR1 where a vehicle 100 travels straight ahead and a turning area TR2 where the vehicle 100 makes a turn. In the straight-ahead area TR1, the traveling path TR has a linear shape.

The turning area TR2 is a place where the vehicle 100 changes its traveling direction. In the turning area TR2, the vehicle 100 makes a U-turn. In the turning area TR2, for example, the traveling path TR has an arcuate shape having a predetermined radius of curvature. In the turning area TR2, the traveling path TR is a semicircle. The turning area TR2 is provided in each end of the straight-ahead area TR1. For example, after traveling through the straight-ahead area TR1 in the +X direction, the vehicle 100 reaches the turning area TR2. After the vehicle 100 makes a turn by 180 degrees in the turning area TR2, the vehicle 100 travels through the straight-ahead area TR1 in the -X direction. On the other hand, after the vehicle 100 travels through the straight-ahead area TR1 in the -X direction, the vehicle 100 reaches the turning area TR2. After the vehicle 100 makes a turn by 180 degrees in the turning area TR2, the vehicle 100 travels through the straight-ahead area TR1 in the +X direction. In this manner, the manufacturing of the vehicle 100 is gradually done as it alternately passes through the straight-ahead area TR1 and the turning area TR2.

The sensor 300 is a camera that captures an image of the vehicle 100 which is moving or is stopped. The sensor 300 captures an image of one or a plurality of vehicles 100. The sensor 300 is provided to detect inter-vehicle distances. The server 200 is able to detect the position of the vehicle 100 in the factory based on the image captured by the sensor 300. The sensor 300 is installed, for example, on a wall surface, a support column, the ceiling or the like of the factory, and captures an image of the vehicle 100 from an oblique upward angle. The sensor 300 captures an image at an angle of view which includes two or more vehicles 100 that form a platoon. The sensor 300 may be installed at a height the same as that of the vehicles 100 and capture images of two or more vehicles 100 from a side direction thereof.

The communication apparatus 330 transmits the image captured by the sensor 300 to the server 200. The communication apparatus 330 may transmit, besides the captured image, information obtained from the captured image to the server 200. That is, the communication apparatus 330 transmits a result of detection detected in the sensor 300. Note that the communication apparatus 330 may be built in the sensor 300 or may be separated from the sensor 300. Further, the communication apparatus 330 may be shared among a plurality of sensors 300. That is, in a case where the plurality of sensors 300 are installed, one communication apparatus 330 may transmit data to the server 200.

As described above, after the sensor 300 captures an image of the vehicle 100, the communication apparatus 330 transmits the captured image and the like to the server 200. The communication apparatus 230 receives data of the captured image from the sensor 300. The server 200 performs predetermined image processing on the image captured by the sensor 300, whereby it is possible to specify inter-vehicle distances. For example, the server 200 calculates inter-vehicle distances of a plurality of vehicles 100 forming a platoon. The number of vehicles forming a platoon is not particularly limited and may be any number that is equal to or greater than three.

Further, the sensor 300 for detecting inter-vehicle distances is not limited to a camera. A sensor for detecting inter-vehicle distances may be various kinds of sensors such as an RGB camera, a far-infrared camera, or a LiDAR. The sensor 300 is not limited to an optical sensor, and may instead be a radar. As a matter of course, two or more sensors 300 may be installed, or two or more sensors 300 may be used in combination with each other. For example, the sensor 300 may include a LiDAR and a camera.

The communication apparatus 330 transmits a result of the detection to the server 200. As described above, the result of the detection transmitted from the sensor 300 may be a captured image or may be information extracted from the image. In a case where, for example, the sensor 300 has an image processing function, the sensor 300 transmits information extracted by image processing to the server 200.

Further, as shown in Fig. 2, the sensor 300 may be mounted on the vehicle 100. The sensor 300 is, for example, an in-vehicle camera, a LiDAR, a radar, or the like. In a case where the sensor 300 is an in-vehicle camera, the sensor 300 captures an image of a vehicle 100 in front (this vehicle may be referred to as a front vehicle). In a case where the sensor 300 is an in-vehicle LiDAR, the sensor 300 measures a distance from the vehicle 100 to the front vehicle 100. The communication apparatus 130 transmits the image and a result of the measurement to the server 200.

The server 200 controls a vehicle 100 in such a way that the vehicle 100 moves along the traveling path TR. Further, the server 200 controls a plurality of vehicles 100 in such a way that the vehicles 100 perform platoon traveling. For example, the vehicles 100 travel along the traveling path TR in one line. The server 200 transmits a control signal to each vehicle 100 by the communication apparatus 230.

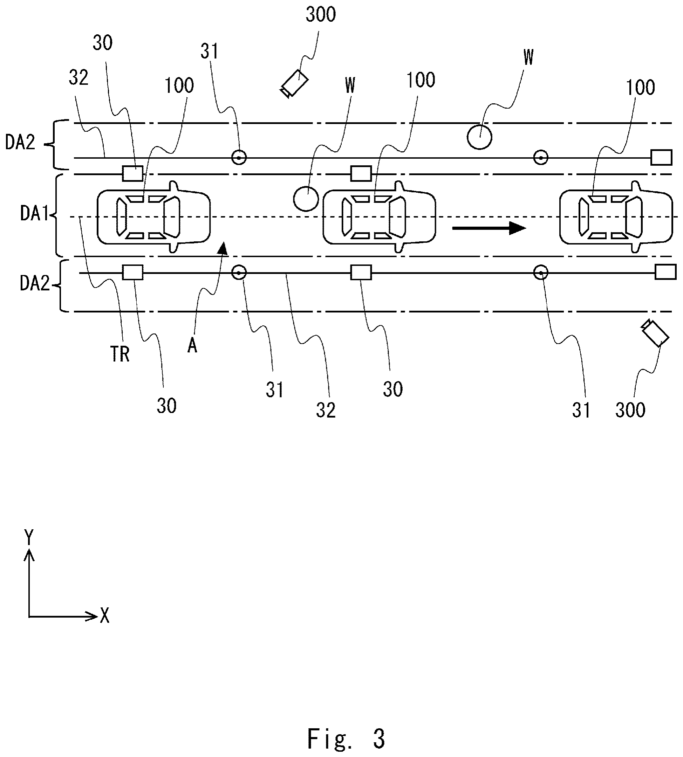

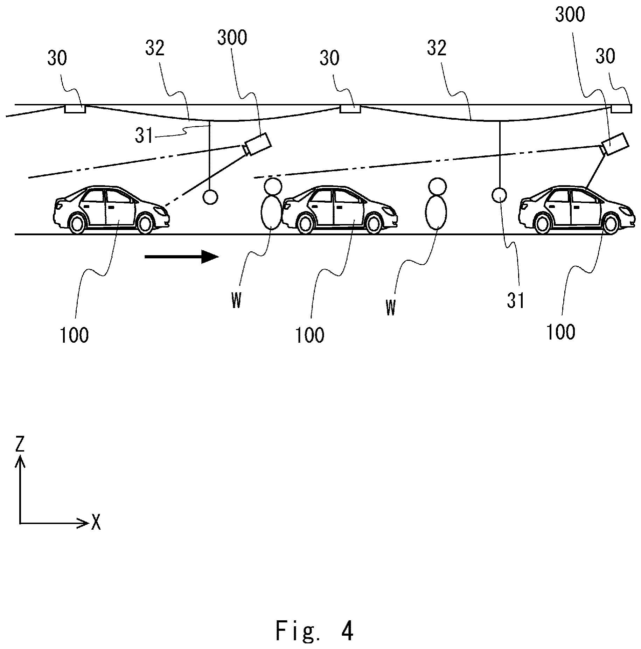

The detailed configuration of the traveling path TR and its peripheral equipment will be described with reference to Figs. 3 and 4. Fig. 3 is a plan view schematically showing a vehicle traveling along the traveling path TR and a worker W in its vicinity. Fig. 4 is a side view schematically showing a vehicle traveling along the traveling path TR and a worker W in its vicinity. Figs. 3 and 4 show three vehicles 100 autonomously traveling along the traveling path TR.

Here, the area where the vehicles 100 travel is referred to as a traveling area A. The traveling area A is an area including the traveling path TR. Here, since the traveling path TR is a straight line along the X direction in the XY plane view, the traveling area A is a belt-like area along the X direction. The traveling area A is a belt-like area having almost the same width as the vehicle width of the vehicle 100.

A worker W is present around the vehicle 100. The worker W is working on the vehicle 100. While the vehicle 100 is traveling in the traveling area A, the worker W performs parts assembly, switch operation, welding, inspection, etc. Thus, the work of each manufacturing process is executed. Then, the work of each manufacturing process is executed in a predetermined order, and thereby the vehicle 100 is manufactured. Even at a position away from the vehicle 100, the worker W is walking. Or, the worker W who has parts is walking toward the vehicle 100.

Here, the area corresponding to the traveling area A is called a detection area DA1. The area other than the detection area DA1 is called a non-detection area DA2. Here, the non-detection area DA2 is arranged on each side of the detection area DA1. Of course, the shape and arrangement of the detection area DA1 and the non-detection area DA2 are not limited to those shown in the drawing. The non-detection area DA2 is an area outside the detection area DA1, that is, an area other than the detection area DA1.

As described later, the detection area DA1 is an area where the server 200 is performing posture detection of the worker W, and the non-detection area DA2 is an area where the server 200 is not performing posture detection of the worker W. Posture detection processing in the detection area DA1 will be described later. The worker W is in the detection area DA1 or the non-detection area DA2.

Furthermore, a control equipment 30 is provided around the traveling area A. The control equipment 30 transmits a control signal for stopping the vehicle 100 to the server 200. The control equipment 30 is installed, for example, on the ceiling or wall of a factory building. The installation position of the control equipment 30 may be movable. Here, the control equipment 30 is installed on both sides of the traveling area A. In other words, the control equipment 30 is installed on both the +Y side and the -Y side of the traveling area A. Of course, the installation position and the number of the control equipment 30 are not particularly limited.

A string 31 is connected to the control equipment 30. The control equipment 30 and the string 31 are installed at a height that does not interfere with the worker W and the vehicle 100. In addition, a suspension string 32 is attached to the string 31. The suspension string 32 is suspended to a height that the worker W can reach. When the worker W pulls the suspension string 32, the control equipment 30 is turned on and a control signal is transmitted. This stops the vehicle 100.

When the worker W finds a problem, trouble, or the like, the worker W pulls the suspension string 32 so that the vehicle 100 can be brought to an emergency stop. The suspension string 32 functions as a stop switch to stop the vehicle 100. In other words, when the worker W pulls the suspension string 32 which is a stop switch, the control equipment 30 is turned on and a control signal is transmitted to the server 200. As a result, the vehicle 100 is stopped. The control equipment 30, the string 31, and the suspension string 32 function as emergency stop equipment.

Here, the suspension string 32 is arranged outside the traveling area A so as not to interfere with the vehicle 100. If the suspension string 32 operated by the worker W is installed in the traveling area A, it may come into contact with the traveling vehicle 100. There is a case where the worker W in the vicinity of the vehicle 100 wants to stop the vehicle 100 immediately. Therefore, the suspension string 32 is installed on both sides of the traveling area A. In other words, the suspension string 32 is arranged in the above-mentioned non-detection area DA2. If the number of the suspension strings 32 is too large, it may obstruct the worker W's work or passage. Therefore, the suspension strings 32 are scattered in the non-detection area DA2.

When the worker W in the traveling area A, that is, the detection area DA1 stops the vehicle 100 by the suspension string 32, the worker W moves to the suspension string 32 and pulls the suspension string 32. Therefore, if the distance from the worker W to the suspension string 32 is far, it is difficult to quickly pull the suspension string 32. Therefore, in the detection area DA1, the vehicle 100 can be controlled based on the image captured by the sensor 300.

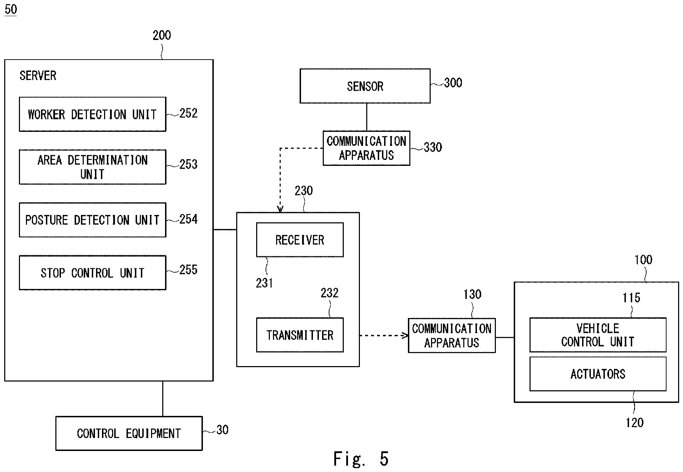

The control for stopping the vehicle 100 during the manufacturing process or the transport process will be described below with reference to Fig. 5. Fig. 5 is a block diagram showing a configuration of the control system of the vehicle manufacturing system 50. As shown in Fig. 5, the server 200 includes a worker detection unit 252, an area determination unit 253, a posture detection unit 254, and a stop control unit 255. While one vehicle 100 and one sensor 300 are shown in Fig. 5, a plurality of vehicles 100 and sensors 300 are actually provided, as shown in Fig. 1.

The vehicle 100 includes a vehicle control unit 115, actuators 120, and a communication apparatus 130. The sensor 300 includes a communication apparatus 130. Note that the server 200 is not limited to a single physical apparatus, and a plurality of servers 200 may be disposed in a distributed manner. For example, the database may be a storage device or a cloud server provided separately from the processor.

The communication apparatus 230 includes a receiver 231 and a transmitter 232. The receiver 231 receives various signals, data and the like from the sensor 300 and the vehicle 100. For example, the receiver 231 receives data indicating the detection result of the sensor 300. The data received from the sensor 300 may be image data or data extracted from the image data.

The transmitter 232 transmits various signals, data and the like to the sensor 300 and the vehicle 100. For example, the transmitter 232 transmits control instruction values to the vehicle 100. Of course, the server 200 may transmit and receive data other than the above. As the communication between the receiver 231 and the transmitter 232, it is possible to use processing according to a general-purpose communication standard such as WiFi (registered trademark).

The communication apparatus 130 of the vehicle 100 is a wireless terminal for wireless communication with the server 200. An IP (Internet Protocol) address or the like is set in the communication apparatus 130. When the communication apparatus 130 of the vehicle 100 receives the control instruction values, the vehicle 100 moves according to the control instruction values. The actuators 120 include a wheel motor for driving the wheels, a steering motor for controlling the steering angle, and a brake for stopping the vehicle. The vehicle control unit 115 generates a control signal to control the actuators 120 in response to the control instruction. The vehicle control unit 115 may consist of an ECU (Electronic Control Unit). Thus, the vehicle 100 can move along the traveling path TR.

In the following description, it is assumed that the server 200 performs image processing or the like on the captured image acquired from the sensor 300, but the processing may be performed outside the server 200. For example, the sensor 300 may perform a part of the processing. Specifically, the sensor 300 may extract feature values necessary for image processing and transmit the feature values to the server 200. Alternatively, a processor such as a GPU (Graphics Processing Unit) provided in the sensor 300 may detect the worker W and transmit the detection result.

As described above, the sensor 300 transmits the captured image to the server 200. The captured image may be a moving image or a still image. When the communication apparatus 230 of the server 200 receives the captured image, the worker detection unit 252 detects the worker W contained in the captured image. For example, the worker detection unit 252 detects each worker W by performing image processing on the captured image. An AI model constructed by machine learning or an image processing program can be used for the processing to detect the worker W.

Since a known technique can be used for the processing of the worker detection unit 252, a detailed description thereof will be omitted. As described above, the sensor 300 may transmit data such as feature values extracted from the captured image instead of transmitting the captured image. Alternatively, the processing of the worker detection unit 252 may be performed by the sensor 300.

The area determination unit 253 determines whether the detected worker W is in the detection area DA1 or the non-detection area DA2. For example, the place of the location of the sensor 300 in a building is fixed. An angle of view is set for each sensor 300. The locations of the traveling area A, the traveling path TR, the detection area DA1, and the non-detection area DA2 in the angle of view of the sensor 300 are known. In the captured image, it is possible to determine whether the worker W is in the detection area DA1 or the non-detection area DA2 according to the location where the worker W is detected, that is, the XY address. Of course, it is possible to identify the worker W in the detection area DA1 based on the size of the worker W in the captured image and its positional relationship with the vehicle 100 and other objects.

An AI model built by machine learning or an image processing program can be used for the processing by the area determination unit 253. A single machine learning model can be used for the processing by the worker detection unit 252 and the area determination unit 253. In this case, the machine learning model outputs the person in the detection area DA1 using the captured image or feature values extracted from the captured image as input data. In other words, the machine learning model may detect and output only the worker W in the detection area DA1.

For example, the worker detection unit 252 can detect the worker W by inputting a captured image to the detection model utilizing artificial intelligence. The detection model may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset has, for example, a plurality of training images including a worker and a ground-truth label indicating whether the area where the worker is located is a detection area or a non-detection area. When CNN learning is performed, parameters of the CNN are preferably updated in such a way that the error between the result of the output by the detection model and the ground-truth label is reduced by a back propagation method.

The posture detection unit 254 detects the posture of the worker W in the detection area DA1 by performing image processing. The posture detection processing can also use a machine learning model built by machine learning. For example, the posture detection unit 254 has an AI model for estimating the skeleton of the worker W. The posture detection unit 254 defines a bounding box including one worker W in the image, and specifies the position of the worker W in the bounding box. For example, the joint positions of the elbow, shoulder, pelvis, ankle, and knee are estimated by image processing. The skeleton is estimated by connecting the XY coordinates of the joint positions. Then, the posture is detected based on the skeleton.

The posture detection unit 254 estimates the skeleton by connecting the joint positions. The posture detection unit 254 estimates the joint positions such as elbow, shoulder, pelvis, wrist, ankle, and knee by image processing. The posture detection unit 254 estimates the xy coordinates of the joint in the captured image. Specifically, when the image of the bounding box including the worker W is input to the machine learning model, the posture detection unit 254 detects the posture of the worker W. The stop control unit 255 stops the vehicle 100 based on the posture detected by the posture detection unit 254.

In the posture detection unit 254, a reference posture for controlling the vehicle 100 is preset. Then, the posture detection unit 254 determines whether the posture of the worker W matches the reference posture. If the posture of the worker W matches the reference posture, the vehicle 100 stops. The worker W stores the reference posture as a stop posture. If the worker W wants to stop the vehicle 100, the worker W takes a stop posture.

The reference posture is, for example, a posture in which both arms are raised. That is, if the worker W wants to stop vehicle 100, both arms are extended vertically upward. Alternatively, the reference posture is a posture in which both arms are extended laterally (horizontally). Both arms are extended laterally. The reference posture is not limited to the above posture. Preferably, the reference posture is a posture that the worker W does not normally take. In other words, the reference posture is a posture different from the work of the worker W. In this way, it is possible to prevent the worker W from unintentionally stopping the vehicle 100. Of course, two or more reference postures may be set.

When the posture detected by the posture detection unit 254 matches the reference posture, the stop control unit 255 generates a stop signal to stop the vehicle 100. Then, the transmitter 232 transmits the stop signal to the vehicle 100. When the communication apparatus 130 of the vehicle 100 receives the stop signal, the vehicle control unit 115 stops the vehicle 100. For example, the vehicle control unit 115 operates the brake. Thus, the vehicle 100 stops.

When the worker W finds an abnormality or the like, the worker W takes the stop posture so that the vehicle 100 can be stopped quickly. Also, the worker W in the detection area DA1 is likely to be far from the suspension string 32. Therefore, when the worker W in the detection area DA1 finds an abnormality or the like, the worker W can quickly control the vehicle 100.

Furthermore, the posture detection unit 254 does not need to perform posture detection processing for the worker W in the non-detection area DA2. The posture detection unit 254 performs image processing, except for the person in the non-detection area DA2. Thus, the processing load can be reduced. In the posture detection processing, high-load processing such as skeleton estimation is performed. In this case, if the posture detection processing is performed for all the workers included in the captured image, the processing load becomes high.

Therefore, as in this embodiment, the posture detection unit 254 performs the posture detection processing only for the worker W in the detection area DA1. Thus, the processing load can be reduced. For example, the number of times of posture detection by a machine learning model with a high processing load can be reduced. As described above, a CNN model can be used as a model for worker detection, area determination, and posture detection. When CNN learning is performed, parameters of the CNN are preferably updated in such a way that the error between the result of the output by the detection model and the ground-truth label is reduced by a back propagation method.

The non-detection area DA2 is provided with a suspension string 32 as a stop switch for stopping the vehicle 100. The worker W in the non-detection area DA2 is located close to the suspension string 32. Therefore, when the worker W in the non-detection area DA2 finds an abnormality or the like, the worker W can stop the vehicle 100 by pulling the suspension string 32. Therefore, the vehicle can be quickly stopped. Of course, the detection area DA1 and the non-detection area DA2 may be set according to the distance from the suspension string 32.

The stop signal may include information indicating the vehicle 100 to be stopped. For example, the stop signal may include the ID and the like of the vehicle 100 to be stopped. In this case, the stop control unit 255 generates a stop signal including the ID and the like of the vehicle to be stopped. The vehicle 100 to be stopped may be determined by the location of the worker W. For example, the vehicle 100 within a predetermined distance from the position of the worker W at which the stop posture is taken may be stopped.

Alternatively, the number of vehicles 100 to be stopped may be predetermined. Five vehicles 100 close to the worker W stop. Alternatively, the vehicle 100 closest to the worker W stops. The vehicle 100 to be stopped may be determined according to the posture of the worker W. For example, when both arms are raised, 10 vehicles 100 stop, and when both arms are spread laterally, 5 vehicles stop. Alternatively, the number of vehicles 100 to be stopped may be increased as the length of time during which the posture matches the reference posture increases.

When the worker W pulls the suspension string 32 (see Figs. 3 and 4), the control equipment 30 transmits a signal to stop the vehicle 100 to the server 200. In the same manner as described above, the server 200 transmits a stop signal for stopping the vehicle 100 to the vehicle 100. Thus, the worker W in the non-detection area DA2 can quickly stop the vehicle 100. Alternatively, the control equipment 30 may directly transmit a stop signal to the vehicle 100.

In order to increase the detection accuracy of the worker W or the accuracy of posture detection, the worker W may wear clothes with characteristic colors or patterns. Alternatively, the worker W may wear a wristband or the like in order to increase the detection accuracy of the arm. In order to increase the detection accuracy of the head, a mark or the like may be provided on the helmet or hat. In image processing, worker detection and posture detection are performed by referring to colors, patterns, wristbands, marks, and the like. In machine learning, images of workers wearing characteristic uniforms, wristbands, hats, helmets, and the like may be used as training data.

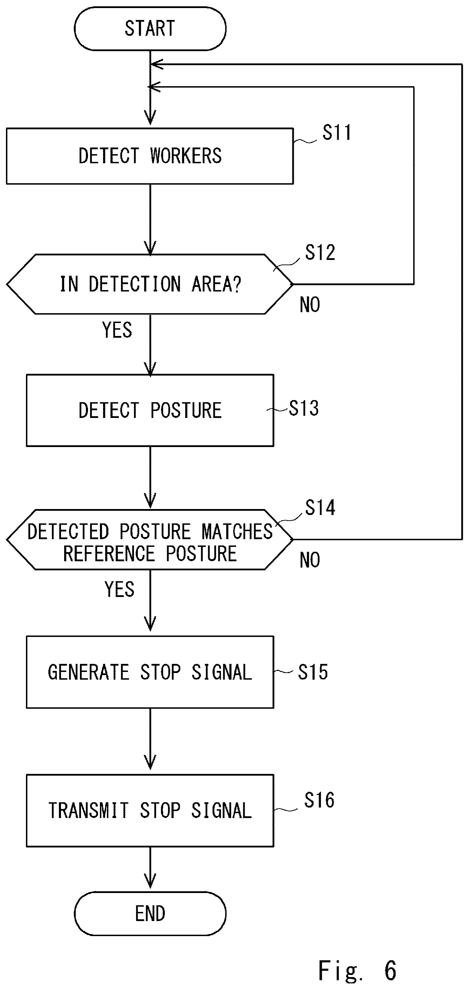

A vehicle manufacturing method will be described with reference to Fig. 6. Fig. 6 is a flowchart showing the vehicle manufacturing method according to this embodiment.

First, the worker detection unit 252 detects worker W included in the captured image (S11). The area determination unit 253 determines whether worker W is in the detection area DA1 (S12). If the worker W is in the detection area DA1 (NO in S12), the process returns to S11. That is, the worker detection unit 252 detects the next worker W (S11).

If the worker W is in the detection area DA1 (YES in S12), the posture detection unit 254 detects the posture of the worker W (S13). Here, the posture detection unit 254 detects the posture of the worker W by performing image processing on the image of the worker W in the detection area DA1. Next, the posture detection unit 254 determines whether the detected posture matches the reference posture (S14). If the detected posture does not match the reference posture (NO in S14), the process returns to S11. That is, the worker detection unit 252 detects the next worker W (S11).

If the posture of the worker W matches the reference posture (YES in S14), the stop control unit 255 generates a stop signal (S15). Here, the transmitter 232 transmits a stop signal to the vehicle 100 (S16). Thus, the vehicle 100 can be quickly stopped. The posture detection unit 254 performs posture detection processing only for the worker W in the detection area DA1. Therefore, the number of workers W to be subjected to posture detection can be reduced, so that an increase in the processing load can be suppressed.

Then, the server 200 repeats the above processing for each frame image of the sensor 300. Of course, the server 200 may not perform the above processing for all frame images of the sensor 300, but may perform the above processing only for some frame images. Furthermore, the server 200 may perform the above processing for some of the sensors 300 without performing the above processing for all the sensors 300.

Hereinafter, travel control examples for controlling traveling of the vehicle 100 in a system will be explained.

### <A. Travel Control Example 1>

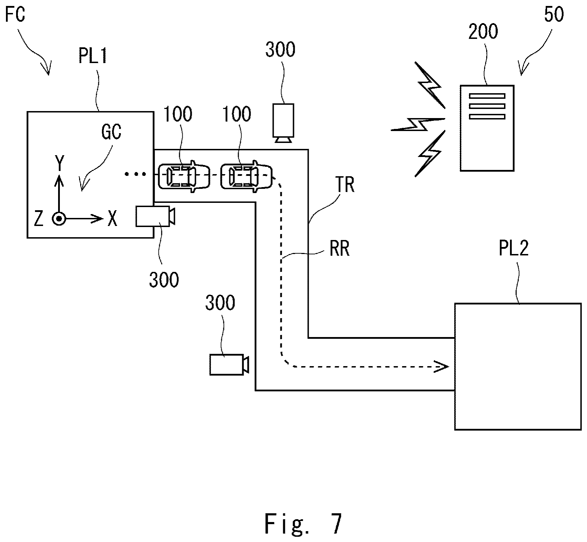

Fig. 7 is a conceptual diagram showing a configuration of a system 50 according to a travel control example 1. The system 50 includes a plurality of vehicles 100, each of which corresponds to a mobile body, a server 200, and one or more sensors 300.

Note that, when the mobile body is other than a vehicle, the terms "vehicle" and "car" in the present disclosure can be replaced by a "mobile body" as appropriate, and the term "travel" can be replaced by "move" as appropriate.

The vehicle 100 is configured to be able to travel by unmanned driving. The "unmanned driving" means driving not dependent on a driver's traveling operation. The traveling operation means an operation regarding at least one of "run", "turn", or "stop" of the vehicle 100. The unmanned driving is achieved by automatic or manual remote control that uses an apparatus located in the outside of the vehicle 100, or by autonomous control of the vehicle 100. Any passenger who does not perform the traveling operation may get on the vehicle 100 traveled by unmanned driving. The passenger who does not perform the traveling operation includes, for example, a person who is just sitting on a seat of the vehicle 100, and a person who is performing work such as an operation of assembling, an operation of inspection, or an operation of switches, which is an operation other than the traveling operation, while getting in the vehicle 100. Note that the driving by the traveling operation of the driver may be referred to as "manned driving".

The "remote control" here includes "complete remote control" in which all the operations of the vehicle 100 are completely determined from the outside of the vehicle 100 and "partial remote control" in which a part of the operations of the vehicle 100 is determined from the outside of the vehicle 100. Further, "autonomous control" includes "complete autonomous control" in which the vehicle 100 autonomously controls its own operation without receiving any piece of information from an external apparatus outside the vehicle 100 and "partial autonomous control" in which the vehicle 100 autonomously controls its own operation using information received from the external apparatus outside the vehicle 100.

In this embodiment, the system 50 is used in a factory FC which manufactures the vehicles 100. The reference coordinate system of the factory FC is a global coordinate system GC. That is, a desired position in the factory FC is expressed by coordinates of X, Y, and Z in the global coordinate system GC. The factory FC includes a first place PL1 and a second place PL2. The first place PL1 and the second place PL2 are connected to each other by a traveling path TR along which the vehicle 100 can travel. A plurality of sensors 300 are installed along the traveling path TR in the factory FC. The positions of the respective sensors 300 in the factory FC are adjusted in advance. The vehicle 100 moves from the first place PL1 to the second place PL2 along the traveling path TR by unmanned driving.

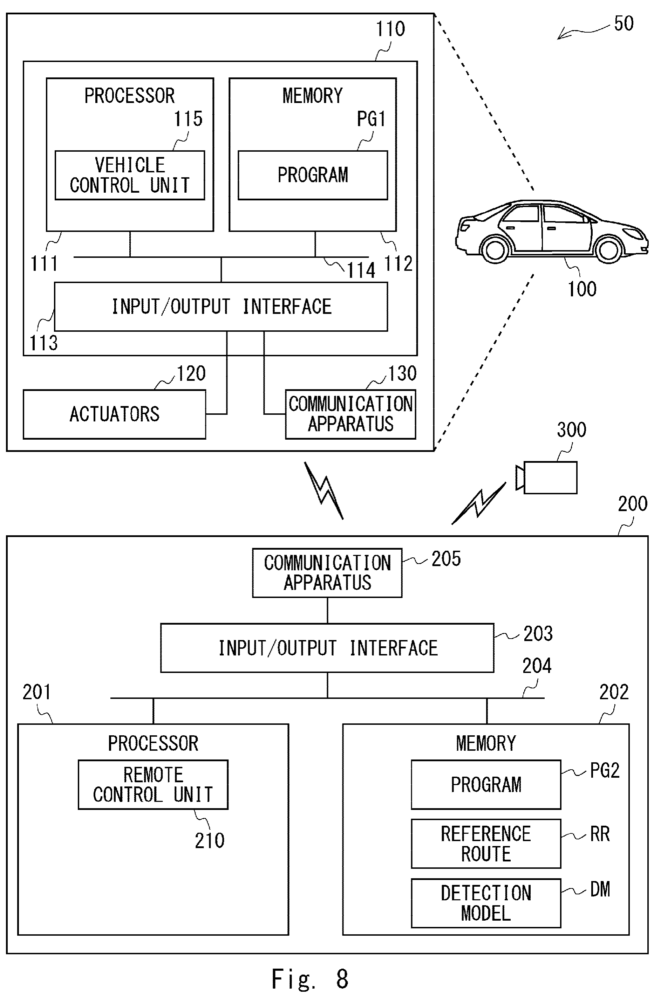

Fig. 8 is a block diagram showing a configuration of the system 50. The vehicle 100 includes a vehicle control apparatus 110 for controlling each part of the vehicle 100, actuators 120 including one or more actuators that drive under a control of the vehicle control apparatus 110, and a communication apparatus 130 for communicating with an external apparatus such as the server 200 by wireless communication. The actuators 120 include an actuator of a drive apparatus for accelerating the vehicle 100, an actuator of a steering apparatus for changing a traveling direction of the vehicle 100, and an actuator of a control apparatus for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to one another via the internal bus 114 in such a way that they can communicate with one another. The actuators 120 and the communication apparatus 130 are connected to the input/output interface 113. The processor 111 executes a program PG1 stored in the memory 112, thereby implementing various functions including a function as a vehicle control unit 115.

The vehicle control unit 115 causes the vehicle 100 to travel by controlling the actuators 120. The vehicle control unit 115 is able to cause the vehicle 100 to travel by controlling the actuators 120 using a travel control signal received from the server 200. The travel control signal is a control signal for traveling the vehicle 100. In this embodiment, the travel control signal includes an acceleration and a steering angle of the vehicle 100 as parameters. In another embodiment, the travel control signal may include, in place of or in addition to the acceleration of the vehicle 100, a speed of the vehicle 100 as a parameter.

The server 200 is composed of a computer including a processor 201, a memory 202, an input/output interface 203, and an internal bus 204. The processor 201, the memory 202, and the input/output interface 203 are connected to one another via the internal bus 204 in such a way that they can communicate with one another. A communication apparatus 205 for communicating with various kinds of apparatuses provided outside the server 200 is connected to the input/output interface 203. The communication apparatus 205 can communicate with the vehicle 100 by wireless communication and can communicate with each of the sensors 300 by wired communication or wireless communication. The processor 201 executes a program PG2 stored in the memory 202, thereby implementing various functions including the function as a remote control unit 210.

The remote control unit 210 acquires a result of detection by the sensors, generates a travel control signal for controlling the actuators 120 of the vehicle 100 using the result of the detection, and transmits the travel control signal to the vehicle 100, thereby causing the vehicle 100 to travel by remote control. The remote control unit 210 may generate not only the travel control signal but also, for example, control signals for controlling actuators for operating various kinds of auxiliary equipment provided in the vehicle 100 or various kinds of equipment such as a windshield wiper, power windows, or lamps. That is, the remote control unit 210 may operate these various kinds of equipment or various kinds of auxiliary equipment by remote control.

The sensor 300 is a sensor that is provided outside the vehicle 100. The sensor 300 according to this embodiment is a sensor that captures the vehicle 100 from the outside of the vehicle 100. The sensor 300 includes a communication apparatus (not shown) and can communicate with other apparatuses such as the server 200 and so on by wired communication or wireless communication.

Specifically, the sensor 300 is composed of a camera. The camera as the sensor 300 captures an image including the vehicle 100, and outputs the captured image as a result of detection.

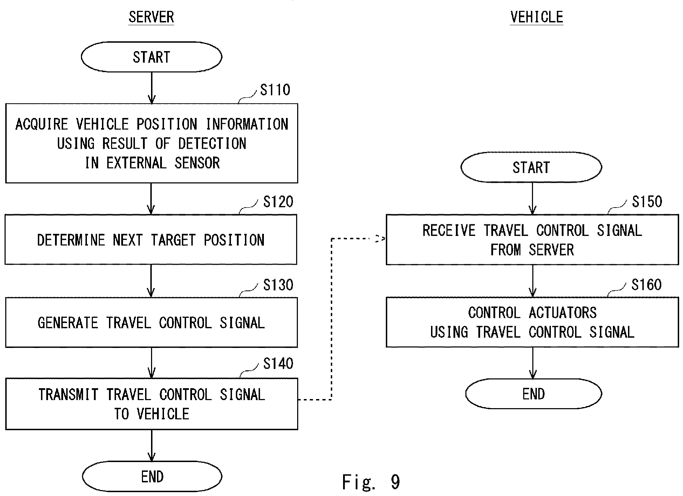

Fig. 9 is a flowchart showing a processing procedure of travel control of the vehicle 100 according to the travel control example. In the processing procedure shown in Fig. 9, the processor 201 of the server 200 functions as the remote control unit 210 by executing the program PG2. Further, the processor 111 of the vehicle 100 functions as the vehicle control unit 115 by executing the program PG1.

In Step S110, the processor 201 of the server 200 acquires vehicle position information of the vehicle 100 using the result of the detection output from the sensor 300. The vehicle position information is position information that forms a basis for generating a travel control signal. In this embodiment, the vehicle position information includes the position and the orientation of the vehicle 100 in a global coordinate system GC of the factory FC. Specifically, in Step S110, the processor 201 acquires the vehicle position information using the captured image acquired from the camera, which is the sensor 300.

Specifically, in Step S110, the processor 201 detects, for example, the outline of the vehicle 100 from the captured image, calculates the coordinate system of the captured image, that is, coordinates of measurement points of the vehicle 100 in the local coordinate system, and converts the calculated coordinates into coordinates in a global coordinate system GC, thereby acquiring the position of the vehicle 100. The outline of the vehicle 100 included in the captured image can be detected, for example, by inputting the captured image to the detection model DM that uses artificial intelligence. The detection model DM is prepared, for example, in the system 50 or in the outside of the system 50 and is stored in the memory 202 of the server 200 in advance. The detection model DM may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset includes, for example, a plurality of training images including the vehicle 100, and a label indicating whether each area in the training image is an area indicating the vehicle 100 or an area indicating a part other than the vehicle 100. When CNN learning is performed, parameters of the CNN are preferably updated in such a way that the error between the result of the output by the detection model DM and the label is reduced by a back propagation method. Further, the processor 201 is able to acquire the orientation of the vehicle 100 by estimating it based on the direction of the moving vector of the vehicle 100 calculated from changes in positions of feature points of the vehicle 100 between frames of the captured image using an optical flow method.

In Step S120, the processor 201 of the server 200 determines the target position that the vehicle 100 should go next. In this embodiment, the target position is expressed by coordinates of X, Y, and Z in a global coordinate system GC. The memory 202 of the server 200 stores a reference route RR, which is a route along which the vehicle 100 should travel, in advance. The route is expressed by a node indicating the departure place, nodes indicating passage points, a node that indicates the target position, and a link connecting the respective nodes. The processor 201 determines the target position that the vehicle 100 should go next using the vehicle position information and the reference route RR. The processor 201 determines the target position on the reference route RR which is ahead of the current position of the vehicle 100.

In Step S130, the processor 201 of the server 200 generates a travel control signal for traveling the vehicle 100 toward the determined target position. The processor 201 calculates the traveling speed of the vehicle 100 from the transition of the position of the vehicle 100 and compares the calculated traveling speed with the target speed. In general, when the traveling speed is lower than the target speed, the processor 201 determines the acceleration in such a way that the vehicle 100 accelerates. On the other hand, when the traveling speed is higher than the target speed, the processor 201 determines the acceleration in such a way that the vehicle 100 decelerates. Further, when the vehicle 100 is positioned on the reference route RR, the processor 201 determines the steering angle and the acceleration to prevent the vehicle 100 from being deviated from the reference route RR. On the other hand, when the vehicle 100 is not positioned on the reference route RR, that is, when the vehicle 100 is deviated from the reference route RR, the processor 201 determines the steering angle and the acceleration in such a way that the vehicle 100 returns onto the reference route RR.

In Step S140, the processor 201 of the server 200 transmits a generated travel control signal to the vehicle 100. The processor 201 repeats, in a predetermined cycle, acquisition of the position of the vehicle 100, determination of the target position, generation of the travel control signal, transmission of the travel control signal, and the like.

In Step S150, the processor 111 of the vehicle 100 receives the travel control signal transmitted from the server 200. In Step S160, the processor 111 of the vehicle 100 controls the actuators 120 using the received travel control signal, thereby causing the vehicle 100 to travel at an acceleration and a steering angle indicated in the travel control signal. The processor 111 repeats reception of the travel control signal, and control of the actuators 120 in a predetermined cycle. With the system 50 in this example, it is possible to cause the vehicle 100 to travel by remote control and to move the vehicle 100 without using transport equipment such as cranes or conveyors.

### <B: Travel Control Example 2>

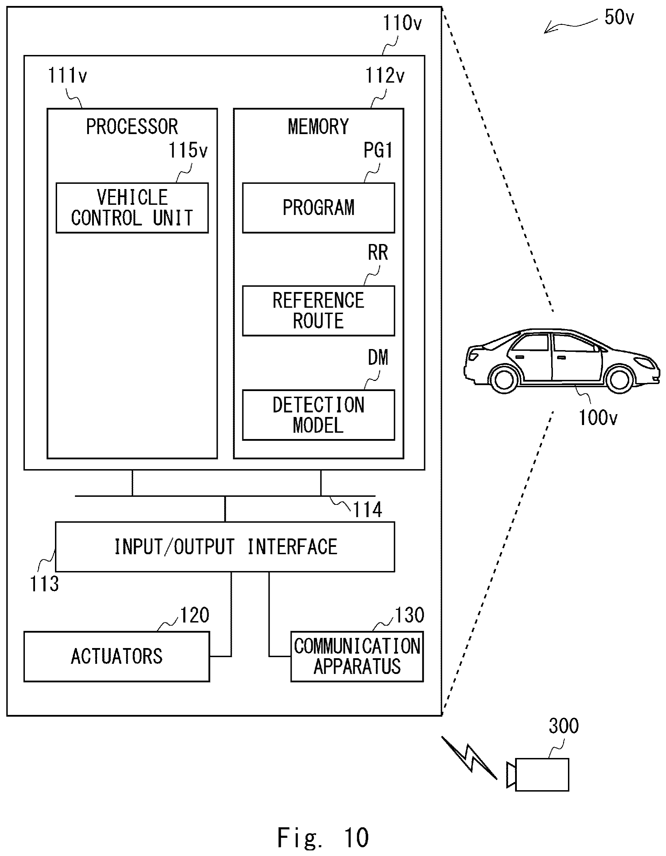

Fig. 10 is an explanatory diagram showing a schematic configuration of a system 50v according to a travel control example 2. In this example, the system 50v is different from that in the travel control example 1 in that the system 50v does not include the server 200. Further, a vehicle 100v in this configuration can travel by autonomous control of the vehicle 100v. The other configurations are the same as those stated above unless otherwise specified.

In this example, a processor 111v of a vehicle control apparatus 110v functions as a vehicle control unit 115v by executing a program PG1 stored in a memory 112v. The vehicle control unit 115v acquires a result of output by a sensor, generates a travel control signal using the result of the output, and outputs the generated travel control signal to operate the actuators 120, thereby enabling the vehicle 100v to travel by autonomous control. In this example, the memory 112v stores, besides the program PG1, a detection model DM and a reference route RR in advance.

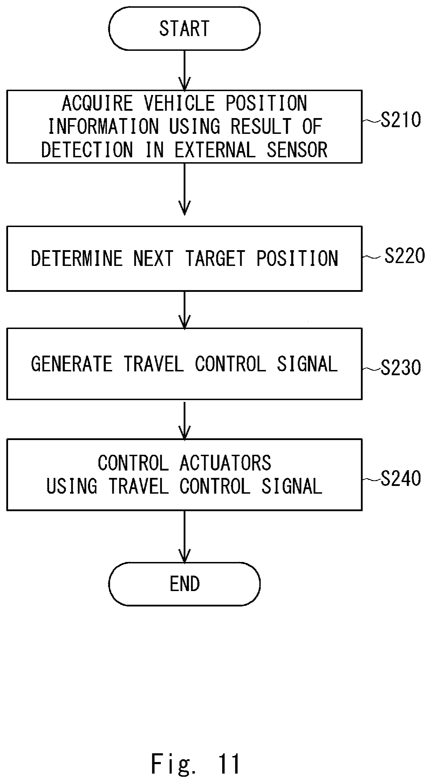

Fig. 11 is a flowchart showing a processing procedure of a travel control of the vehicle 100v in Travel control Example 2. In the processing procedure shown in Fig. 11, the processor 111v of the vehicle 100v functions as the vehicle control unit 115v by executing the program PG1.

In Step S210, the processor 111v of the vehicle control apparatus 110v acquires vehicle position information using a result of detection output from a camera, which is the sensor 300. In Step S220, the processor 111v determines the target position that the vehicle 100v should go next. In Step S230, the processor 111v generates a travel control signal for causing the vehicle 100v to travel toward the determined target position. In Step S240, the processor 111v controls the actuators 120 using the generated travel control signal, thereby causing the vehicle 100v to travel according to a parameter indicated in the travel control signal. The processor 111v repeats acquisition of the vehicle position information, determination of the target position, generation of the travel control signal, and control of the actuators in a predetermined cycle. With the system 50v in this example, it is possible to cause the vehicle 100v to travel by autonomous control of the vehicle 100v without remotely controlling the vehicle 100v by the server 200.

### YY: Other Travel Control Examples

(YY1) In the above examples, the sensor 300 is a camera. On the other hand, the sensor 300 may not be a camera, and may instead be, for example, Light Detection And Ranging (LiDAR). In this case, the result of the detection output from the sensor 300 may be three dimensional point cloud data indicating the vehicle 100. In this case, the server 200 and the vehicle 100 may acquire the vehicle position information by template matching that uses three dimensional point cloud data indicating the result of the detection and reference point cloud data that is prepared in advance.

(YY2) In the travel control example 1, the server 200 executes processing from the acquisition of the vehicle position information to the generation of the travel control signal. On the other hand, the vehicle 100 may perform at least a part of the processing from the acquisition of the vehicle position information to the generation of the travel control signal. For example, the following forms from (1) to (3) may be employed.
(1) The server 200 may acquire vehicle position information, determine the target position that the vehicle 100 should go next, and generate a route from the current position of the vehicle 100 indicated in the acquired vehicle position information to the target position. The server 200 may generate a route to a target position which is between the current position and the target position or may generate a route to the target position. The server 200 may transmit the generated route to the vehicle 100. The vehicle 100 may generate the travel control signal in such a way that the vehicle 100 travels along the route received from the server 200 and control the actuators 120 using the generated travel control signal.
(2) The server 200 may acquire vehicle position information and transmit the acquired vehicle position information to the vehicle 100. The vehicle 100 may determine the target position that the vehicle 100 should go next, generate a route from the current position of the vehicle 100 indicated in the received vehicle position information to the target position, generate a travel control signal in such a way that the vehicle 100 travels along the generated route, and control the actuators 120 using the generated travel control signal.
(3) In the forms of the above (1) and (2), an internal sensor may be mounted on the vehicle 100, and a result of detection output from the internal sensor may be used in at least one of the generation of the route or the generation of the travel control signal. The internal sensor is a sensor mounted on the vehicle 100. The internal sensor may include, for example, a sensor that detects a motion state of the vehicle 100, a sensor that detects an operation state of each part of the vehicle 100, and a sensor that detects an environment near the vehicle 100. Specifically, the internal sensor may include, for example, a camera, LiDAR, a millimeter wave radar, an ultrasonic sensor, a GPS sensor, an acceleration sensor, a gyro sensor or the like. For example, in the form of the above (1), the server 200 may acquire the result of the detection in the internal sensor and reflect the result of the detection in the internal sensor in the route when the route is generated. In the form of the above (1), the vehicle 100 may acquire the result of the detection in the internal sensor and reflect the result of the detection in the internal sensor in a travel control signal when the travel control signal is generated. In the form of the above (2), the vehicle 100 may acquire the result of the detection in the internal sensor, and reflect the result of the detection in the internal sensor in the route when the route is generated. In the form of the above (2), the vehicle 100 may acquire the result of the detection in the internal sensor, and reflect the result of the detection in the internal sensor in the travel control signal when the travel control signal is generated.

(YY3) In the travel control example 2, an internal sensor may be mounted on the vehicle 100v and the result of the detection output from the internal sensor may be used in at least one of the generation of the route or the generation of the travel control signal. For example, the vehicle 100v may acquire the result of the detection in the internal sensor, and reflect the result of the detection in the internal sensor in the route when the route is generated. The vehicle 100v may acquire the result of the detection in the internal sensor and reflect the result of the detection in the internal sensor in the travel control signal when the travel control signal is generated.

(YY4) In the travel control example 2, the vehicle 100v acquires the vehicle position information using the result of the detection by the sensor 300. On the other hand, an internal sensor is mounted on the vehicle 100v, and the vehicle 100v may acquire vehicle position information using a result of detection in the internal sensor, determine the target position that the vehicle 100v should go next, generate a route from the current position of the vehicle 100v indicated in the acquired vehicle position information to the target position, generate a travel control signal for traveling along the generated route, and control the actuators 120 using the generated travel control signal. In this case, the vehicle 100v may travel without using the result of the detection by the sensor 300. Note that the vehicle 100v may acquire a target arrival time or congestion information from the outside of the vehicle 100v and reflect the target arrival time or the congestion information in at least one of the route or the travel control signal. Further, all the functional configurations of the system 50v may be provided in the vehicle 100v. That is, the processing implemented by the system 50v in the present disclosure may be achieved by the vehicle 100v alone. For example, a leading vehicle 100v may transmit control instruction values to the following vehicle 100.

(YY5) In the travel control example 1, the server 200 automatically generates a travel control signal to be transmitted to the vehicle 100. On the other hand, the server 200 may generate the travel control signal to be transmitted to the vehicle 100 in accordance with an operation performed by an external operator located in the outside of the vehicle 100. For example, the external operator may operate a manipulation apparatus including a display for displaying a captured image output from the sensor 300, a steering, an accelerator pedal, and a brake pedal for remotely operating the vehicle 100, and a communication apparatus for communicating with the server 200 by wired communication or wireless communication, and the server 200 may generate a travel control signal in accordance with the operation added to the manipulation apparatus.

(YY6) In each of the above travel control examples, it is sufficient that the vehicle 100 include a configuration capable of moving by unmanned driving, and the vehicle 100 may have, for example, a form of a platform including the configurations stated below. Specifically, it is sufficient that the vehicle 100 at least include the vehicle control apparatus 110 and the actuators 120 in order to exert three functions of "run", "turn", and "stop" by unmanned driving. In a case where the vehicle 100 externally acquires information for unmanned driving, the vehicle 100 may further include a communication apparatus 130. That is, the vehicle 100 that can move by unmanned driving may not be provided with at least some of internal components such as a driving seat or a dashboard, at least some of the external components such as a bumper or a fender, or a body shell. In this case, before the vehicle 100 is shipped from the factory FC, the other components such as a body shell may be mounted on the vehicle 100, or the other components such as the body shell may be mounted on the vehicle 100 after the vehicle 100 is shipped from the factory FC in a state in which the other components such as the body shell are not mounted on the vehicle 100. Each of the components may be mounted thereon from a desired direction such as an upper side, a lower side, a front side, a rear side, a right side, or a left side of the vehicle 100, mounted thereon from the same direction, or mounted thereon from different directions. In terms of the form of the platform, the position may be determined as in the vehicle 100 according to the first embodiment.

(YY7) The vehicle 100 may be manufactured by combining a plurality of modules. The module means a unit formed of a plurality of components grouped according to a part or a function of the vehicle 100. For example, the platform of the vehicle 100 may be manufactured by combining a front module that forms a front part of the platform, a central module that forms a central part of the platform, and a rear module that forms a rear part of the platform with one another. Note that the number of modules that form the platform is not limited to three, and may be two or smaller or four or larger. Further, in addition to or in place of the components that form the platform, components of the vehicle 100 that form parts other than the platform may be formed in modules. Further, these modules may include any exterior components such as a bumper or a grill or any interior components such as seats and a console. Further, not only the vehicle 100 but also any form of mobile body may be manufactured by combining a plurality of modules. These modules may be manufactured, for example, by joining a plurality of components by welding, fixtures, or the like, or may be manufactured by integrally molding at least some of the components that form the module as one component by casting. A molding method of integrally forming one component, in particular, a relatively large-sized component is also called gigacasting or megacasting. For example, the above front module, central module, and rear module may be manufactured using gigacasting.

(YY8) Transporting a vehicle 100 using traveling of the vehicle 100 by unmanned driving is also referred to as "self-propelled transportation". Further, a configuration for achieving self-propelled transportation is referred to as a "vehicle remote control autonomous travel transportation system". Further, a production method for producing vehicles 100 using self-propelled transportation is also referred to as "self-propelled production". In the self-propelled production, for example, in a factory FC that manufactures the vehicles 100, a part of the transportation of the vehicle 100 is achieved by self-propelled transportation.

(YY9) In each of the above travel control examples, some or all of the functions and processing implemented in the form of software may be implemented in the form of hardware. Further, some or all of the functions and processing implemented in the form of hardware may be implemented in the form of software. For example, various types of circuits such as an integrated circuit or a discrete circuit may be used as hardware for implementing various types of functions in each of the above embodiments.

In the above travel control examples 1 and 2 described above as well, the stop control shown in Figs. 3-6, etc. can be applied. For example, the remote control unit 210 shown in Fig. 8 performs stop control processing by the posture of the worker W. In Figs. 7-11 as well, stop control by the suspension string 32 and the control equipment 30 shown in Figs. 3 and 4 may be applied.

Further, some or all of the processing in the sensor 300, the vehicle 100, the server 200, the sensor 300, the robot 600 and the like can be implemented as a computer program. The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A vehicle manufacturing system for performing control in such a way that a plurality of vehicles (100) forming a platoon travel during a manufacturing process or a transporting process, the vehicle manufacturing system comprising:
a camera configured to capture an image of a traveling area where the plurality of vehicles travel and an area near the traveling area;
a worker detection unit (252) configured to detect a worker based on the image captured by the camera;
an area determination unit (253) configured to determine whether or not the worker is in a detection area corresponding to the traveling area or a non-detection area which is on each of right and left sides of the traveling area;
a posture detection unit (254) configured to detect a posture of a worker who is in the detection area by performing image processing on the image captured by the camera; and
a stop control unit (255) configured to stop the vehicle based on the posture of the worker.

2. The vehicle manufacturing system according to claim 1, wherein the posture detection unit (254) performs the image processing, except for a person who is in the non-detection area.

3. The vehicle manufacturing system according to claim 1, wherein a stop switch for stopping the vehicle is provided in the non-detection area.

4. The vehicle manufacturing system according to any one of claims 1 to 3, wherein the stop control unit (255) stops the vehicle when a posture of the worker is a preset stop posture.

5. A vehicle manufacturing method for performing control in such a way that a plurality of vehicles (100) forming a platoon travel during a manufacturing process or a transporting process, the vehicle manufacturing method comprising:
a step of capturing, by a camera, an image of a traveling area where the plurality of vehicles travel and an area near the traveling area;
a step of detecting a worker based on the image captured by the camera;
a step of determining whether or not the worker is in a detection area corresponding to the traveling area or a non-detection area which is on each of right and left sides of the traveling area;
a step of detecting a posture of a worker who is in the detection area by performing image processing on the image captured by the camera; and
a step of stopping the vehicle based on the posture of the worker.
